# EUROPÄISCHE PATENTANMELDUNG

(11) **EP 1 391 522 A2**
(43) Veröffentlichungstag der Anmeldung: **25.02.2004**
(21) Anmeldenummer: 03014329.1
(22) Anmeldetag: 26.06.2003
(51) Int. Cl.: C21B 13/12, C21C 5/52, F27B 3/08, F27D 23/00

(54) **Elektrode sowie Verfahren zu deren Anordnung in Elektro-Lichtbogenöfen**

(30) Priorität: 17.08.2002 DE 10237759
(71) Anmelder: SMS Demag AG, 40237 Düsseldorf (DE)
(72) Erfinder: König, Roland, 47057 Duisburg (DE); Weischedel, Walter, Dr., 40670 Meerbusch (DE)
(74) Vertreter: Valentin, Ekkehard, Dipl.-Ing.

(57) **Zusammenfassung**

Um Elektroden für Elektro-Lichtbogenöfen (1), in denen metallurgische Prozesse durchgeführt werden, die einen stromleitenden Elektrodenkern (8a-d) umfassen, dahingehend weiterzubilden, dass sie auch bei chemisch extrem aggressiven Schmelzen oder bei Schmelzen, die durch Elektrodenkohlenstoff verfälscht würden, eingesetzt werden können, soll der Elektrodenkern (8a-d) einschließlich des in Richtung Ofenboden weisenden Elektrodenkernendes (10) eine Bewehrung (9a-d) aus einem gegenüber der Schmelze und der Schlacke prozessneutralen und aus einem elektrisch leitfähigen Material aufweisen, und diese Bewehrung (9a-d) mindestens den Elektrodenbereich (13), der in Kontakt mit der Schlacke oder der Schmelze (12) kommt, gänzlich umhüllen. Der Elektrodernkern wird in die keramische Bewehrung eingeführt, die stationär am Ofen angeordnet sein kann.

## Beschreibung

Die Erfindung betrifft eine Elektrode für Elektro-Lichtbogenöfen, in denen metallurgische Prozesse, wie Schmelz- und/oder Verarbeitungsprozesse, durchgeführt werden, wobei die Elektrode einen stromleitenden Elektrodenkern umfasst. Zudem betrifft die Erfindung ein Verfahren zur Anordnung einer stromführenden Elektrode in einem Elektro-Lichtbogenofen, insbesondere Lichtbogenreduktionsofen, der einen unteren Ofenteil zur Aufnahme der Schmelze und einen oberen Ofenteil umfasst, wobei die Elektrode durch eine Öffnung im oberen Ofenteil eingebracht wird und sich in das Ofeninnere erstreckt.

Bekanntermaßen wird bei Elektro-Lichtbogenöfen die Energie, die für die darin ablaufenden metallurgischen Vorgänge benötigt wird, als elektrische Energie über Elektroden eingebracht. Elektro-Lichtbogenöfen werden beispielsweise bei Recyclingprozessen, insbesondere zum Einschmelzen von Stahlschrott, verwendet. Bei einigen bekannten Verfahren tauchen die Elektroden in die bei dem Prozess entstehende Schmelze oder in die für den Prozess eingebrachte Schmelze teilweise ein. Üblicherweise werden Kohlenstoff- oder Graphit-Elektroden zur Stromübertragung eingesetzt.

Aus der DE 36 03 948 A1 ist in Lichtbogenreduktionsofen bekannt. Um zu verhindern, dass die Elektroden im freien Ofenraum zwischen dem Ofendeckel und dem Schlackenbad der aggressiven Atmosphäre des Ofeninnenraums ausgesetzt sind und die aggressive Ofenatmosphäre zu einem massiven radialen Abbrand der Elektroden führt, ist aus dieser Schrift bekannt, Schutzschilde im Ofen vorzusehen, die beabstandet zu den Elektroden parallel in den Ofeninnenraum hineinragen und die Elektroden von der sauerstoff- und staubhaltigen Atmosphäre abschirmen.

Ebenfalls sind Elektroden mit einem Elektrodenkern bekannt, der zur Verhinderung von Oxidation durch die Ofenatmosphäre mit hauchdünnen Schutzschichten entlang seiner Mantelfläche versehen ist. Derartige Schutzschichten dienen nur als Oxidationsschutz und halten chemisch extrem aggressiven Schmelzen nicht stand, beispielsweise Sonderschmelzen, die mit Chlor gespült werden. Zum anderen ist es für bestimmte Sonderschmelzen unerwünscht, wenn der Elektrodenkohlenstoff in die Schmelze übergeht.

Der Erfindung liegt demnach die Aufgabe zugrunde, eine Elektrode derart weiterzubilden, dass sie auch bei chemisch extrem aggressiven Schmelzen oder bei Schmelzen, die durch Elektrodenkohlenstoff verfälscht würden, eingesetzt werden kann.

Diese Aufgabe wird durch die Elektrode mit den Merkmalen des Anspruchs 1 sowie das Verfahren mit den Merkmalen des Anspruchs 14 gelöst. Vorteilhafte Weiterentwicklungen sind in den Unteransprüchen beschrieben.

Erfindungsgemäß wird vorgeschlagen, dass der Elektrodenkern einschließlich des in Richtung Ofenboden weisenden Elektrodenkemendes bzw. der Elektrodenkernspitze eine Bewehrung aus einem gegenüber der Schmelze und der Schlacke prozessneutralen und aus einem elektrisch leitfähigen Material aufweist, und dass die Bewehrung mindestens den Elektrodenbereich, der in Kontakt mit der Schlakke oder der Schmelze kommt, gänzlich einhüllt und somit den Kontakt des Elektrodenkerns mit der Schlacke/Schmelze verhindert.

Die Bewehrung verhält sich gegenüber der Schmelze und/oder der Schlacke bzw. dem noch nicht eingeschmolzenen Schmelzgut über die gesamte Prozessdauer prozessneutral. Aufgrund dieser Eigenschaft und dadurch, dass auch der Boden der Elektrode von dem Schmelzbad gänzlich abgeschlossen ist, kann die Elektrode auch von chemisch aggressiven Medien nicht angegriffen werden; zudem kann kein Kohlenstoff aus der Elektrode in das Schmelzbad entweichen. Insgesamt wird eine sehr verschleissarme bzw. verschleißfeste Elektrode erhalten, wobei ggfs. auf eine Nachsetzvorrichtung verzichtet werden kann. Außerdem können diese Elektroden auch für solche Schmelzen eingesetzt werden, die nicht in Kontakt mit Kohlenstoff kommen dürfen.

Die Bewehrung kann nach Art einer Schutzkappe auf dem Elektrodenkern angeordnet sein, vorzugsweise erstreckt sich die prozessneutrale Bewehrung auch über den Elektrodenbereich, der der Ofenatmosphäre ausgesetzt ist. Die Bewehrung ist dann als vollständige Umhüllung der Mantelfläche und des Elektrodenbodens ausgebildet und schützt den Elektrodemkern über seine gesamte Länge.

Nach einer ersten Ausführungsform ist die Bewehrung unmittelbar auf den Elektrodenkern aufgebracht, beispielsweise, indem der Bewehrungswerkstoff unmittelbar aufgespritzt wird. In einem solchen Fall sollen die Bewehrungsmaterialien einen dem Material des Elektrodenkerns im wesentlichen entsprechenden Wärmeausdehnungskoeffizienten aufweisen, um Temperaturunterschiede der Elektrode bei der Verwendung und somit Eigenspannungen zu vermeiden und zu verhindern, dass die Bewehrungsschicht von dem Elektrodenkern abplatzt.

Nach einer besonders bevorzugten Ausführungsform ist die Bewehrung als separater tiegelartiger Aufnahmebereich für den Elektrodenkern ausgebildet, in den der Elektrodenkern einführbar ist. Somit wird eine starke und dichte Bewehrung für den Elektrodenkern erreicht. Hierbei sind mehrere Alternativen möglich. Zum einen kann die Bewehrung separat am Lichtbogenofen befestigt werden und anschließend der Elektrodenkern in den tiegelartigen Aufnahmebereich eingefahren werden. Zum anderen können die Bewehrung und der Elektrodernkern außerhalb des Ofens, vorzugsweise nahe beim Ofen, zusammengeführt und anschließend als Einheit in den Ofen eingeführt werden. Hierbei können Elektrodernkem und Bewehrung eine lösbar miteinander verbundene Einheit bilden, beispielsweise durch eine Bolzenverbindung; sie können auch, ggfs. unlösbar, durch einen Presssitz miteinander verbunden werden. Für eine Presspassung empfiehlt es sich, den Elektrodernkern und den tiegelartigen Aufnahmebereich konusförmig auszubilden, um den Elektrodernkern unter dichter Pressung in den Tiegel einpressen zu können.

Vorzugsweise besteht die Bewehrung aus einer technischen Keramik mit einer guten elektrischen Leitfähigkeit. Es können beispielsweise SiSiC (Siliciuminfiltriertes Siliciumcarbid) oder Mischkeramiken auf Basis von Al₂O₃, TiC oder TiN Verwendung finden. Es sind beispielsweise auch technische Keramiken bekannt, die bei etwa 1000°C einen elektrischen Widerstand aufweisen, der nur noch 1% seines Wertes bei Raumtemperatur ausmacht.

Als Alternative für eine technische Keramik kommt auch der Einsatz von synthetischen, hitzebeständigen und elektrisch leitenden Materialien in Frage.

Die Dicke der Bewehrung hängt von den Abmessungen der Elektroden und von der erforderlichen Leistung ab. Aus mechanischen Gründen sollte die Dicke nicht unter etwa 2 mm liegen.

Um ein unterschiedliches Wärmeausdehnungsverhalten des Materials des Elektrodenkerns und des Bewehrungsmaterials kompensieren zu können, soll zwischen dem Elektrodenkern und der Bewehrung ein elektrisch leitendes Puffermedium angeordnet sein. In Abhängigkeit der Eintauchtiefe der Elektrode in das Schmelzbad dehnen sich der Elektroderkern und die Bewehrung über ihre Länge aufgrund der Wärmeeinbringung unterschiedlich stark aus. Das Zwischen- bzw. Puffermedium soll so beschaffen sein, dass es schwankende Abstände zwischen Elektrodenkern und Bewehrung kompensieren bzw. unterschiedliche Volumenprofile ausfüllen kann.

Vorzugsweise wird hierzu zwischen dem Elektrodenkern und der Bewehrung ein Zwischenraum belassen, der mit einem derartigen elektrisch leitfähigen Medium aufgefüllt wird. Das Medium ist hierzu vorzugsweise schüttfähig, beispielsweise in einem pulver- oder kugelförmigen, im weitesten Sinne granulatförmigen Zustand. Beispiele für ein solches kleinkörniges Material sind Grafit oder Metallspäne. Es kann auch unmittelbar eine Flüssigkeit als Zwischenmedium in den Zwischenraum gefüllt werden. Es ist ebenso vorteilhaft, in den Zwischenspalt metallisiertes Textilgewebe oder Metallgewebe einzubringen, die eine Stromverbindung zwischen Kern und Bewehrung bilden und als Pufferschicht arbeiten.

Sofern das Medium nicht im flüssigen Zustand in den Spalt eingebracht wird, empfiehlt es sich, ein im Zwischenraum wirkendes Heizelement, vorzugsweise ein SiC-Heizelement, vorzusehen. Feste, kleinkörnige, schüttfähige Medien mit niedrigem Schmelzpunkt werden kurz vor oder beim Prozessbeginn durch Einbringen von Wärme in den flüssigen Zustand überführt, so dass im Zwischenraum keine den Stromfluss behindernde Hohlräume verbleiben.

Aufgrund der separaten Bewehrung und/oder des Puffermediums werden unterschiedliche Wärmeausdehnungsverhalten kompensiert und die Dicke der Bewehrung nicht auf bestimmte Werte beschränkt.

Die Elektrode kann neben einem Elektrodenkern aus Kohlenstoff, insbesondere aus Graphit, auch einen Elektrodernkern aus einem metallischen Material aufweisen. Dies empfiehlt sich insbesondere bei Schmelzen, die auf keinen Fall mit Kohlenstoff vermischt werden dürfen. Im Falle eines Elektrodenkerns aus einem metallischen Material soll dieser Kühlkanäle aufweisen, die zur Kühlung von einem flüssigen oder gasförmigen Medium durchströmt werden. Dies führt zu einem Dauer-Elektrodenkern. Dies weist den weiteren Vorteil auf, dass die Bewehrung indirekt gekühlt wird und damit deren Verschleiß minimiert wird.

Die erfindungsgemäßen Elektroden können bei allen Arten von Lichtbogenöfen eingesetzt werden. Sie können sowohl bei Drehstromöfen als auch bei Gleichstromöfen Verwendung finden. Bevorzugt sollen derartige Elektroden in Lichtbogen-Reduktionsöfen eingesetzt werden, deren Einsatzgebiet somit auf chemisch-physikalische Sonderschmelzprozesse erweitert werden können. Hier können sie insbesondere auch in Schmelzen Verwendung finden, die chemisch sehr aggressiv sind.

Weitere Einzelheiten und Vorteile der Erfindung ergeben sich aus den Unteransprüchen und aus der nachfolgenden Beschreibung, in der die in den Figuren dargestellten Ausführungsformen der Erfindung und das erfindungsgemäße Verfahren näher erläutert werden. Dabei sind neben den oben aufgeführten Kombinationen von Merkmalen auch Merkmale alleine oder in anderen Kombinationen erfindungswesentlich. Es zeigen:
- Fig. 1: schematisch als Schnittdarstellung einen Schmelzofen mit zwei Elektroden in unterschiedlicher Ausführungsform;
- Fig. 2: schematisch als Schnittdarstetellung einen Elektrodenkern mit einer unmittelbar bzw. direkt durch Auftragen oder Aufspritzen aufgebrachten Bewehrung;
- Fig. 3: schematisch als Schnittdarstellung eine über einen Presssitz verbundene Einheit aus Elektrodenkem und Bewehrung.

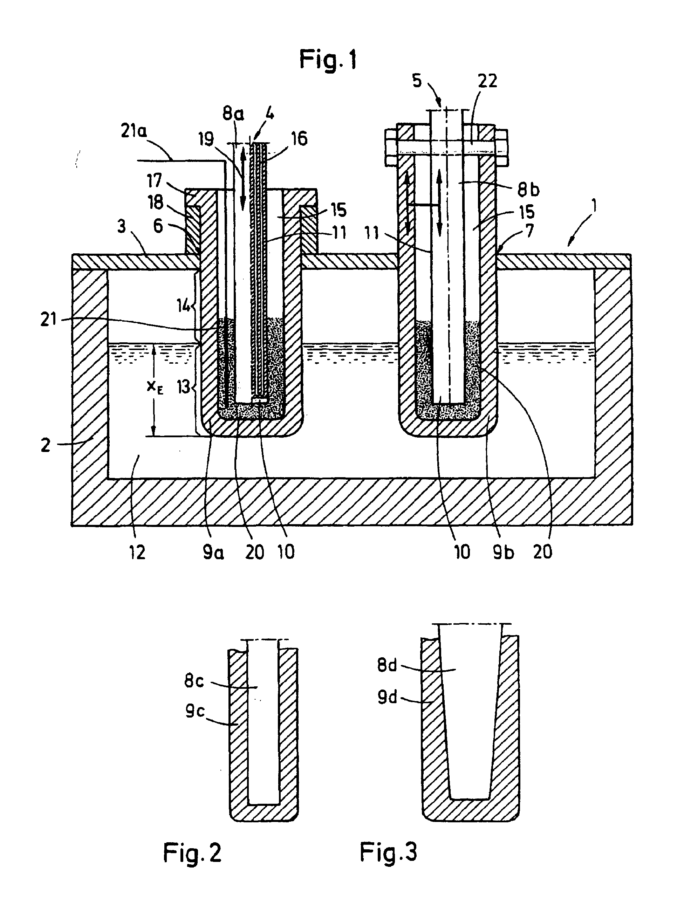

Fig. 1 zeigt einen Elektro-Lichtbogenofen 1, beispielsweise einen Lichtbogenreduktionsofen, mit einem unteren Ofenteil 2 und einem oberen Ofenteil 3 in Form eines Deckels, in den zwei stromleitende Elektroden 4, 5 eingebracht sind. Der Ofen 1 selbst ist mit einer Feuerfest-Ausmauerung und/oder Kühlelementen (nicht gezeigt), wie wasserdurchströmte Kühlkörper, versehen. Wenn für den jeweiligen metallurgischen Schmelz- und/oder Verarbeitungsprozess eine geschlossene Ofenausführung erforderlich sein sollte, werden, wie hier gezeigt, die Elektroden 4, 5 gasdicht durch Öffnungen 6, 7 im Deckel geführt.

Den Elektroden 4, 5 ist gemeinsam, dass sie einen Elektrodernkern 8a,b aufweisen sowie eine Bewehrung 9a,b, die das Ende 10 bzw. die Spitze sowie die Mantelfläche 11 des Elektrodenkems 8a,b umgibt. Die Bewehrung 9a,b hat die Aufgabe, chemisch-physikalische Reaktionen zwischen den Elektrodenkernen 8a,b und dem schmelzflüssigen Bad 12 zu vermeiden. Die Bewehrung 9a,b erstreckt sich hierbei über den Elektrodenbereich 13, der in das Schmelzbad 12 eintaucht, als auch über den Elektrodenbereich 14 , der der Ofenatmosphäre ausgesetzt ist.

Die in Fig. 1 dargestellten Elektroden 4, 5 zeigen Einheiten, bei denen in die Bewehrungen 9a,b, die als separater tiegelartiger Aufnahmebereich ausgebildet sind, die Elektrodenkerne 8a,b mit einem Zwischenraum 15 geführt sind. Die linke Elektrode 4 nach Fig. 1 besteht aus einem metallischen Elektrodenkem 8a, in den vertikal verlaufende Kühlkanäle 16 integriert sind, die von einem Kühlsystem (nicht gezeigt) gespeist werden. Das durchströmende Medium, zum Beispiel Wasser, kühlt den Elektrodernkern 8a und somit gleichzeitig die Bewehrung 9a. Die Bewehrung 9a selbst ist als tiegelartiger Aufnahmebereich aus einer technischen Keramik ausgebildet. Die Bewehrung 9a kann auch als ein unten verschlossenes Rohr oder eine bodenseitig verschlossene Hülse bezeichnet werden. Dieser Tiegel wird mittels eines Kragens 17 auf geeigneten Stelzen 18 bzw. Stützen an der Ofendecke oder im Ofenhaus aufgehängt. Er ragt bis in das Schmelzbad 12 hinein. Zur Stromeinleitung wird anschließend der Elektrodenkern 8a von oben vertikal (vgl. Pfeilrichtung 19) in das Innere des Aufnahmebereichs eingeführt. Es empfiehlt sich, bereits in einem vorbereitenden Schritt schüttfähiges Medium 20 bzw. Material mit niedrigem Schmelzpunkt in den unteren Teil des Aufnahmebereichs einzubringen. Wenn dann der Elektrodenkern 8a positioniert ist, wird der sich zwischen der Außenwand des Elektrodenkerns 8a und der Innenwand des Aufnahmebereichs ergebende Zwischenraum 15 bzw. Spalt mit weiterem schüttfähigen Material 20 aufgefüllt. Zusätzlich wird in den Zwischenraum 15 ein Heizelement, beispielsweise ein SiC-Heizleiter, 21 vertikal angeordnet, der über eine Leitung 21a von außen mit Energie versorgt wird. Dieses Heizelement 21 soll das feste Material 20 im Zwischenraum 15 aufschmelzen und somit optimale Voraussetzungen für einen Stromfluss von dem Elektrodenkern 8a durch das Medium und die äußere Bewehrung 9a schaffen. Zudem dient das Zwischenmaterial als Puffer bzw. Kompensationselement gegenüber einem unterschiedlichen Wärmeausdehnungsverhalten des Elektrodenkerns und der Bewehrung. Nach Beendigung des Prozesses und Abkühlung des Ofens wird dieses Medium sich wieder verfestigen. Zur Vermeidung von Spannungen bei der Verfestigung des Mediums kann eine konische Ausführung von Elektrodenkern oder mindestens der Innenseite der Bewehrung vorgesehen sein. Dadurch, dass der Elektrodernkem nicht in Kontakt mit der Schmelze kommt, ist dieser kaum einem Verschleiss ausgesetzt.

Die beschriebene Elektrode ist aufgrund des stationär angeordneten Tiegels hinsichtlich ihrer Eintauchtiefe x_{E} im schmelzflüssigen Bad 12 nicht variabel. Mit der rechts dargestellten Elektrode 5 wird eine Ausführungsform gezeigt, die hinsichtlich ihrer Eintauchtiefe variabel einstellbar ist. Hierzu wird der Elektrodenkern 8b, beim gezeigten Beispiel eine Kohlenstoff oder eine Graphitelektrode, in den separaten tiegelartigen Aufnahmebereich der Bewehrung 9b insbesondere außerhalb des Ofens 1 eingeführt und der Elektrodenkern 8b sowie der obere Teil des Aufnahmebereichs bzw. der Bewehrung 9b mit einem gemeinsamen Bolzen 22 lösbar verbunden. Ein sich ergebender Zwischenraum 15 wird ebenso wie bei der linken Elektrode mit einem leitfähigen Material 20 gefüllt und die Elektrode als Einheit in den Ofen 1 geführt.

Nach der dritten Ausführungsform, wie sie in Fig. 2 gezeigt ist, ist die Bewehrung 9c als Schutzschicht unmittelbar auf den Elektrodernkern 8c aufgebracht worden. Hierdurch wird ein unmittelbar elektrischer Kontakt zwischen Bewehrung und Elektrodernkern erreicht. Dann sind Elektrodenkern 8c und Bewehrung 9c ein einstückiges nicht voneinander lösbares Bauteil, die zusammen in den Ofen und wieder heraus bewegbar sind. Gleiches gilt auch für eine Ausführungsform nach Fig. 3, bei der der Elektrodenkern 8d eine konische Form aufweist und passgenau als Presssitz in eine Bewehrung 9d geschoben werden kann, wobei ein guter Stromfluss zwischen den beiden Teilen entsteht. Die Bewehrung 9d kann auch ggfs. konisch geformt sein. Es ist bei diesen Ausführungsformen auch möglich, noch eine elektrisch leitende Zwischenschicht vorzusehen.

### Bezugszeichenliste:

- 1: Elektro-Lichtbogenofen
- 2: unteres Ofenteil
- 3: oberes Ofenteil (Deckel)
- 4: Elektrode
- 5: Elektrode
- 6: Öffnung im Deckel
- 7: Öffnung im Deckel
- 8a-d: Elektrodenkern
- 9a-d: Bewehrung
- 10: Elektrodenkemende
- 11: Mantelfläche des Elektrodenkerns
- 12: schmelzflüssiges Bad
- 13: eingetauchter Elektodenbereich
- 14: Elektrodenbereich mit Kontakt zur Ofenatmosphäre
- 15: Zwischenraum
- 16: Kühlkanäle
- 17: Kragen
- 18: Stelzen
- 19: Pfeilrichtung
- 20: schüttfähiges Medium
- 21: Heizelement
- 21a: Versorgungsleitung für das Heizelement
- 22: Bolzen

- x_{E}: Eintauchtiefe

## Patentansprüche

1. Elektrode für Elektro-Lichtbogenöfen (1), in denen metallurgische Prozesse durchgeführt werden, wobei die Elektrode (4, 5) einen stromleitenden Elektrodenkern (8a-d) umfasst,
**dadurch gekennzeichnet,**
**dass** der Elektrodenkern (8a-d) einschließlich des in Richtung Ofenboden weisenden Elektrodenkernendes (10) eine Bewehrung (9a-d) aus einem gegenüber der Schmelze und der Schlacke prozessneutralen und aus einem elektrisch leitfähigen Material aufweist, und dass die Bewehrung (9a-d) mindestens den Elektrodenbereich (13), der in Kontakt mit der Schlacke oder der Schmelze (12) kommt, gänzlich umhüllt.

2. Elektrode nach Anspruch 1,
**dadurch gekennzeichnet,**
**dass** die Bewehrung (9a-d) sich auch über den Elektrodenbereich (14), der der Ofenatmosphäre ausgesetzt ist, erstreckt.

3. Elektrode nach Anspruch 1 oder 2,
**dadurch gekennzeichnet,**
**dass** die Bewehrung (9a,b,d) als separater tiegelartiger Aufnahmebereich für den Elektrodernkem (8a,b,d) ausgebildet ist, in den der Elektrodenkem einführbar ist.

4. Elektrode nach einem der Ansprüche 1 bis 3,
**dadurch gekennzeichnet,**
**dass** der tiegelartige Aufnahmebereich der Bewehrung (9b) mit dem darin eingeführten Elektrodenkern (8b) lösbar verbunden ist.

5. Elektrode nach einem der Ansprüche 1 bis 4,
**dadurch gekennzeichnet,**
**dass** das Außenmaß des Elektrodenkerns (8d) sich so zum Innenmaß des tiegelartigen Aufnahmebereichs der Bewehrung (9d) verhält, dass der Elektrodenkern darin unter einem Presssitz eingeführt ist, wobei die Form des Elektrodenkerns und der Bewehrung vorzugsweise konisch verlaufen.

6. Elektrode nach einem der Ansprüche 1 bis 5,
**dadurch gekennzeichnet,**
**dass** zwischen Elektrodenkern (8a,b) und der Bewehrung (9a,b) ein elektrisch leitendes und insbesondere zusätzlich gut wärmeleitendes Medium (20) angeordnet ist.

7. Elektrode nach Anspruch 6,
**dadurch gekennzeichnet,**
**dass** zwischen Elektrodenkern (8a,b) und Bewehrung (9a,b) ein Zwischenraum (15) ist, der mit dem elektrisch leitenden Medium (20) aufgefüllt ist.

8. Elektrode nach Anspruch 7,
**dadurch gekennzeichnet,**
**dass** das Medium (20) zum Auffüllen des Zwischenraums (15) schüttfähig und hierbei pulverförmig oder kugelförmig oder flüssig ist oder das Medium zum Auffüllen des Zwischenraums ein Metallgewebe ist.

9. Elektrode nach Anspruch 8,
**dadurch gekennzeichnet,**
**dass** diese ein im Zwischenraum (15) wirkendes Heizelement (21) umfasst, um noch nicht flüssiges Auffüll-Medium (20) im Zwischenraum (15) in den flüssigen Zustand zu überführen.

10. Elektrode nach Anspruch 1 oder 2,
**dadurch gekennzeichnet,**
**dass** die Bewehrung (9c) unmittelbar auf den Elektrodenkern (8c) aufgebracht ist.

11. Elektrode nach einem der vorherigen Ansprüche,
**dadurch gekennzeichnet,**
**dass** die Bewehrung (9a-d) aus einer elektrisch leitfähigen Keramik oder einem synthetischen, hitzebeständigen und elektrisch leitenden Material besteht.

12. Elektrode nach einem der vorherigen Ansprüche,
**dadurch gekennzeichnet,**
**dass** der Elektrodenkern aus einem metallischen Material (8a) oder aus Kohlenstoff, insbesondere aus Graphit (8b), besteht.

13. Elektrode nach Anspruch 12,
**dadurch gekennzeichnet,**
**dass** ein Elektrodenkern, insbesondere der aus einem metallischen Material, Kühlkanäle (16) aufweist, die zur Kühlung von einem flüssigen oder gasförmigen Medium durchströmt werden.

14. Verfahren zum Anordnen einer stromführenden Elektrode (4, 5) nach einem der Ansprüche 1 bis 13 in einem Elektro-Lichtbogenofen (1), insbesondere Lichtbogenreduktionsofen, der einen unteren Ofenteil (2) zur Aufnahme der Schmelze (12) und einen oberen Ofenteil (3) umfasst, wobei die Elektrode (4, 5) durch eine Öffnung (6, 7) im oberen Ofenteil (3) eingebracht wird und sich in das Ofeninnere erstreckt,
**dadurch gekennzeichnet,**
**dass** in eine separate Elektrodenbewehrung (9a,b,d), die aus einem gegenüber der Schmelze und/oder der Schlacke prozessneutralen und aus einem elektrisch leitfähigen Material besteht und die den Elektroderkern (8a,b,d) einschließlich des in Richtung Ofenboden weisenden Elektrodemkernendes (10) umhüllt und somit einen Kontakt der Elektrode mit der Schlacke oder Schmelze (12) verhindert, der Elektrodenkern (8a,b,d) eingeführt wird.

15. Verfahren nach Anspruch 14,
**dadurch gekennzeichnet,**
**dass** die separate Bewehrung (9a) stationär im oberen Ofenteil (3) angeordnet, anschließend der Elektrodenkern (8a) in die Bewehrung (9a) lösbar eingeführt wird und nach Bedarf wieder ausgeführt wird.

16. Verfahren nach Anspruch 14,
**dadurch gekennzeichnet,**
**dass** der Elektrodenkern (8b) des Ofens in die Bewehrung (9b) eingeführt ist, der Elektrodenkern und die Bewehrung zu einer Einheit lösbar miteinander verbunden werden und anschließend die Einheit im Ofenraum positioniert wird.

17. Verfahren nach einem der Ansprüche 14 bis 16,
**dadurch gekennzeichnet,**
**dass** ein sich zwischen der Außenwand des Elektrodenkerns (8a,b) und der Innenwand der Bewehrung (9a,b) verbleibender Zwischenraum (15) mit einem elektrisch leitfähigem Medium (20) aufgefüllt wird.
